# FASCICULE DE BREVET EUROPEEN

(11) **EP 4 101 711 B1**
(45) Date de publication et mention de la délivrance du brevet: **15.11.2023**
(21) Numéro de dépôt: 22177564.6
(22) Date de dépôt: 07.06.2022
(51) Int. Cl.: B60T 13/66, B60T 17/22, B61L 3/00

(54) **LOCOMOTIVE FERROVIAIRE ET VÉHICULE FERROVIAIRE ASSOCIÉ**
EISENBAHNLOKOMOTIVE UND ENTSPRECHENDES SCHIENENFAHRZEUG
RAILWAY LOCOMOTIVE AND ASSOCIATED RAILWAY VEHICLE

(30) Priorité: 09.06.2021 FR 2106072
(43) Date de publication de la demande: 14.12.2022
(73) Titulaire: ALSTOM Holdings, 93400 Saint-Ouen-sur-Seine (FR)
(72) Inventeur: GIRAUDON, Gilles, 90000 BELFORT (FR); THEVENOT, Lionel, 70200 MAGNY VERNOIS (FR); CHEVARTZMANN, Eric, 90000 BELFORT (FR); PETROSYAN, Gevorg, 90000 BELFORT (FR)
(74) Mandataire: Lavoix

(56) Documents cités:
- EP-A1- 3 623 253
- EP-A2- 2 511 146
- WO-A1-2020/239367

## Description

La présente invention concerne une locomotive ferroviaire comprenant :
- une interface de sécurité ayant une configuration activée et une configuration désactivée,
- un système de freinage comprenant une conduite générale de freinage et une conduite principale d'alimentation, le système de freinage étant apte à ralentir, de préférence immobiliser, la locomotive ferroviaire, et
- un dispositif de freinage d'urgence comprenant au moins un module de freinage d'urgence, le module de freinage d'urgence comprenant :
   - un groupe de vannes d'urgence,
   - une électrovanne définissant une position ouverte, dans laquelle le groupe de vannes d'urgence est alimenté pneumatiquement par la conduite principale d'alimentation, et une position fermée, dans laquelle le groupe de vannes d'urgence est isolé de la conduite principale d'alimentation.

Lorsque l'interface de sécurité est en configuration activée et l'électrovanne est en position ouverte, le groupe de vannes d'urgence est alors en un état alimenté pneumatiquement par la conduite principale d'alimentation. Lorsque l'interface de sécurité est en configuration désactivée ou l'électrovanne est en position fermée, le groupe de vannes d'urgence est alors en un état isolé pneumatiquement de la conduite principale d'alimentation.

Pour des raisons de sécurité, un dispositif de freinage d'urgence est généralement installé dans les locomotives ferroviaires.

Un tel dispositif de freinage d'urgence comprend généralement des modules de freinage d'urgence aptes à activer les freins, afin de ralentir, de préférence immobiliser le véhicule, par exemple en cas d'obstacle sur la voie. Quelques exemples sont divulgues dans le EP 2 511 146 A2 ou dans le EP 3 623 253 A1.

Les modules de freinages d'urgence sont généralement contrôlés par une interface de sécurité connectée à un système de contrôle des trains, par exemple lié à un système de signalisation ferroviaire ETCS (*European Train Control System*).

Lorsqu'une locomotive est remorquée par une autre locomotive, il est nécessaire d'inhiber la fonction d'activation du module de freinage d'urgence de la locomotive remorquée, afin de pouvoir autoriser le remorquage et le déplacement de cette locomotive.

A cette fin, le mécanicien doit généralement désactiver manuellement le dispositif de freinage d'urgence.

Le mécanicien doit fermer au moins un robinet localisé à l'intérieur de la locomotive et notamment de la salle des machines. Ledit robinet permet d'isoler un module de freinage d'urgence des freins et d'ainsi inhiber son fonctionnement.

Pour des raisons de sécurité, le dispositif de freinage d'urgence comprend généralement au moins deux modules de freinage d'urgence, le mécanicien doit alors fermer une pluralité de robinets.

Une telle opération manuelle est fastidieuse et implique le risque d'une fausse manipulation, comme par exemple une fermeture ou ouverture insuffisante d'un robinet, ou une fermeture d'une partie des robinets, etc.

Un but de l'invention est de fournir une locomotive ferroviaire dont le fonctionnement est plus sûr et économique, notamment comprenant un dispositif de freinage d'urgence apte à être désactivé sans action manuelle du mécanicien, tout en respectant les exigences de sécurité.

A cet effet, l'invention a pour objet la locomotive ferroviaire précitée, caractérisée en ce que le module de freinage d'urgence comprend en outre un manostat disposé entre l'électrovanne et le groupe de vannes d'urgence, le manostat étant apte à communiquer l'état alimenté ou isolé pneumatiquement du groupe de vannes d'urgence à l'interface de sécurité au moins en configuration activée.

La locomotive ferroviaire selon l'invention peut comprendre l'une ou plusieurs des caractéristiques suivantes, prise(s) isolément ou suivant toute combinaison techniquement possible :
- le groupe de vannes d'urgence définit une configuration de mise à l'atmosphère de la conduite générale de freinage et une configuration de maintien de la pression dans la conduite générale de freinage, l'interface de sécurité étant apte à envoyer un ordre de freinage d'urgence au groupe de vannes d'urgence, la réception d'un ordre de freinage d'urgence par le groupe de vannes d'urgence passant le groupe de vannes d'urgence en configuration de mise à l'atmosphère de la conduite générale de freinage ;
- l'interface de sécurité est apte à envoyer un ordre de freinage d'urgence au groupe de vannes d'urgence uniquement lorsque le manostat associé au groupe de vannes d'urgence communique un état alimenté pneumatiquement du groupe de vannes d'urgence ;
- la locomotive ferroviaire comprend un système d'alarme ayant une configuration d'alarme et une configuration éteinte, le système d'alarme étant apte à passer en configuration d'alarme lorsque l'interface de sécurité est en configuration activée et le manostat communique à l'interface de sécurité un état isolé pneumatiquement du groupe de vannes d'urgence ;
- le groupe de vannes d'urgence comprend une vanne magnétique et une vanne pneumatique définissant une position de mise à l'atmosphère dans laquelle la conduite générale de freinage est connectée à une sortie d'air et une position fermée dans laquelle la conduite générale de freinage est isolée de la sortie d'air, la vanne magnétique étant apte à faire passer la vanne pneumatique de la position de mise à l'atmosphère à la position fermée, et respectivement de la position fermée à la position de mise à l'atmosphère lorsque le groupe de vannes d'urgence est dans un état alimenté pneumatiquement ;
- le groupe de vannes d'urgence comprend, en outre, une vanne de sectionnement surveillée par l'interface de sécurité et ayant une position fermée, dans laquelle la conduite générale de freinage est isolée de la sortie d'air, et une position ouverte, dans laquelle la conduite générale de freinage est connectée à la sortie d'air lorsque la vanne pneumatique est en position de mise à l'atmosphère ;
- le dispositif de freinage d'urgence comprend un manostat de régulation disposé sur la conduite générale de freinage en amont du ou des groupes de vannes d'urgence ;
- la locomotive ferroviaire comprend une source d'alimentation électrique ayant un état sous tension électrique et un état hors tension électrique, lorsque la source d'alimentation électrique est en l'état sous tension électrique, l'interface de sécurité étant en configuration activée, et lorsque la source d'alimentation électrique est en état hors tension électrique, l'interface de sécurité étant en configuration désactivée ;
- la locomotive ferroviaire comprend au moins deux modules de freinage d'urgence ;
- l'électrovanne est une électrovanne bistable ;
- le manostat est un dispositif de détection de seuil de pression du module de freinage d'urgence; et
- lorsqu'un manostat d'un des modules de freinage d'urgence communique un état isolé pneumatiquement du groupe de vannes d'urgence correspondant et le manostat de l'autre des modules de freinage d'urgence communique un état alimenté pneumatiquement du groupe de vannes d'urgence correspondant, l'interface de sécurité envoie un ordre de freinage d'urgence à le groupe de vannes d'urgence étant en état alimenté pneumatiquement.

L'invention a également pour objet un véhicule ferroviaire comprenant une première locomotive et une deuxième locomotive, la première et la deuxième locomotives étant des locomotives telles que définies ci-dessus, la première locomotive remorquant la deuxième locomotive, l'interface de sécurité de la première locomotive étant en configuration activée, l'interface de sécurité de la deuxième locomotive étant en configuration désactivée.

L'invention sera mieux comprise à la lecture de la description qui va suivre, donnée uniquement à titre d'exemple, et faite en se référant aux dessins annexés, sur lesquels :
- [Fig 1] la figure 1 est une vue schématique d'un véhicule ferroviaire comprenant deux locomotives selon l'invention ;
- [Fig 2] la figure 2 est une vue schématique du dispositif de freinage d'urgence selon l'invention ;
- [Fig 3] la figure 3 est une vue schématique d'un module de freinage d'urgence selon l'invention, la locomotive étant en configuration de remorquage ;
- [Fig 4] la figure 4 est une vue schématique du module de freinage d'urgence de la figure 3, la locomotive étant en configuration motrice, le groupe de vannes d'urgence étant en état alimenté pneumatiquement et électriquement et étant en configuration de maintien de la pression dans la conduite générale de freinage ;
- [Fig 5] la figure 5 est une vue schématique du module de freinage d'urgence de la figure 3, la locomotive étant en configuration motrice, le groupe de vannes d'urgence étant en état alimenté pneumatiquement, en état non-alimenté électriquement et étant en configuration de mise à l'atmosphère de la conduite générale de freinage ; et
- [Fig 6] la figure 6 est un organigramme schématique du procédé de décision de l'interface de sécurité.

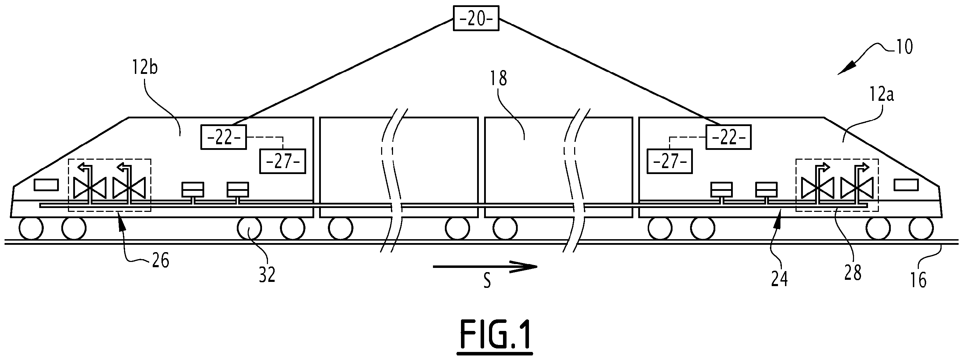

La figure 1 illustre un véhicule ferroviaire 10 selon l'invention comprenant une première locomotive 12a et une deuxième locomotive 12b.

Le véhicule ferroviaire 10 est prévu pour se déplacer suivant une direction de déplacement longitudinal dans un premier sens S de circulation définissant un avant et un arrière du véhicule ferroviaire 10. La direction longitudinale correspond à la direction des rails 16 sur lesquels circule le véhicule ferroviaire 10.

La première locomotive 12a est par exemple située à une extrémité avant du véhicule 10.

La première locomotive 12a agit par exemple comme une motrice du véhicule 10.

Le conducteur du véhicule 10 est installé dans la première locomotive 12a et contrôle ainsi le déplacement du véhicule 10.

La deuxième locomotive 12b est située à l'arrière de la première locomotive 12a, et par exemple à une extrémité arrière du véhicule 10 comme illustré sur la figure 1.

La première locomotive 12a remorque la deuxième locomotive 12b.

Comme illustré sur la figure 1, une pluralité de voitures 18 est par exemple disposée à l'arrière de la première locomotive 12a et par exemple entre la première locomotive 12a et la deuxième locomotive 12b. La première locomotive 12a remorque la pluralité de voitures 18.

En variante, le véhicule ferroviaire 10 comprend uniquement une première locomotive 12a motrice du véhicule ferroviaire 10.

En variante ou en complément, le véhicule ferroviaire 10 est prévu pour se déplacer suivant une direction de déplacement longitudinal dans un deuxième sens de circulation opposé au premier sens de circulation S. La deuxième locomotive 12b agit alors comme une motrice du véhicule 10 et la première locomotive 12a est remorquée par la deuxième locomotive 12b.

Une locomotive 12 sera décrite plus en détails dans la suite de la description. La personne du métier comprendra que les caractéristiques décrites pour la locomotive 12 s'applique d'une manière identique à la première locomotive 12a et à la deuxième locomotive 12b.

La locomotive 12 prend soit une configuration de remorquage, dans laquelle celle-ci est remorquée par une autre locomotive 12, soit une configuration motrice, dans laquelle celle-ci est motrice du véhicule 10.

Le véhicule ferroviaire 10 comprend un système de contrôle 20 embarqué.

Le système de contrôle 20 est par exemple une composante du système européen de gestion du trafic ferroviaire ERTMS (European Rail Traffic Management System) comme un système de signalisation ferroviaire européen ETCS (European Train Control System).

Le système de contrôle 20 permet de gérer le déplacement du véhicule en fonction des paramètres extérieurs, tels que la signalisation. Le système de contrôle 20 envoie des ordres de contrôle à la locomotive 12 en configuration motrice, par l'intermédiaire d'une interface de sécurité 22 embarquée dans la locomotive 12.

Selon l'invention, la locomotive 12 comprend une interface de sécurité 22, un système de freinage 24 et un dispositif de freinage d'urgence 26.

L'interface de sécurité 22 est liée au système de contrôle 20 du véhicule 10.

L'interface de sécurité 22 peut passer d'une configuration activée à une configuration désactivée. En configuration activée, l'interface de sécurité 22 est active et apte à recevoir des ordres du système de contrôle 20 du véhicule 10. En configuration désactivée, l'interface de sécurité 22 est inactive et n'est pas apte à recevoir des ordres du système de contrôle 20 du véhicule 10.

Lorsque la locomotive 12 est en configuration motrice, l'interface de sécurité 22 est en configuration activée.

Lorsque la locomotive 12 est en configuration de remorquage, l'interface de sécurité 22 est en configuration désactivée.

A cet effet, la locomotive 12 comprend par exemple, en outre, une source d'alimentation électrique 27 ayant un état sous tension électrique et un état hors tension électrique.

La source d'alimentation électrique 27 est par exemple une batterie électrique qui est allumée et donc mise en état sous tension électrique lorsque la locomotive 12 est en configuration motrice, et qui est éteinte et donc mise en état hors tension électrique lorsque la locomotive 12 est en configuration de remorquage.

Lorsque la source d'alimentation électrique 27 est en état hors tension électrique, l'interface de sécurité 22 est en configuration désactivée. Lorsque la source d'alimentation électrique 27 est en état sous tension électrique, l'interface de sécurité 22 est en configuration activée.

L'interface de sécurité 22 est par exemple alimentée par ladite source d'alimentation électrique 27, de sorte que lorsque la source d'alimentation électrique 27 est mise en état hors tension électrique, l'interface de sécurité 22 passe automatiquement en configuration désactivée.

Le système de freinage 24 est apte à ralentir, de préférence immobiliser la locomotive ferroviaire 12.

Le système de freinage 24 est par exemple un système de freinage pneumatique.

Le système de freinage 24 comprend une conduite générale de freinage 28, une conduite principale d'alimentation 30 et des semelles de freins (non illustrées).

Les semelles de freins sont mobiles entre une position serrée et une position desserrée. En position serrée, les semelles de freins sont en contact des roues ferroviaires 32 et bloquent ainsi la rotation des roues ferroviaires 32 sur les rails 16. Le déplacement de la locomotive 12 sur les rails 16 en est ainsi ralenti, voir bloqué. En position desserrée, les semelles de freins ne sont pas en contact avec les essieux des roues ferroviaires 32, les roues ferroviaires 32 sont ainsi libres en rotation sur les rails 16.

Les semelles de frein sont sollicitées d'une manière permanente vers leur position serrée, par exemple par des ressorts ou par un autre dispositif de sollicitation.

Lorsque la locomotive 12 est en mouvement et n'est pas dans une situation de freinage, la conduite générale de freinage 28 est alimentée continuellement en air sous pression (par exemple allant de 4,8 bar à 6,2 bar) par la conduite principale d'alimentation 30 qui est par exemple reliée à un réservoir principal (non illustré).

La pression à l'intérieur de la conduite générale de freinage 28 est ainsi maintenue. Les semelles de freins sont ainsi maintenues en position desserrée à l'encontre de la sollicitation vers la position serrée. La locomotive 12 est libre de se déplacer.

Lorsque la pression de l'air à l'intérieur de la conduite générale de freinage 28 est supprimée et n'est pas maintenue, les semelles de freins passent en position serrée sous l'effet de leur sollicitation permanente vers la position serrée, entrainant ainsi un freinage de la locomotive 12.

Lorsque la conduite générale de freinage 28 est mise à l'atmosphère, c'est-à-dire est connectée à une sortie d'air, l'air à l'intérieur de la conduite générale de freinage 28 peut s'échapper, ce qui entraine une baisse de pression ou suppression de la surpression à l'intérieur de la conduite générale de freinage 28 et donc un freinage de la locomotive 12.

Le système de freinage 24 comprend également un système de commande manuelle 34, permettant au conducteur de commander le système de freinage 24, et plus particulièrement de connecter la conduite générale de freinage 28 à une sortie d'air afin d'entrainer un freinage d'urgence de la locomotive 12 si nécessaire.

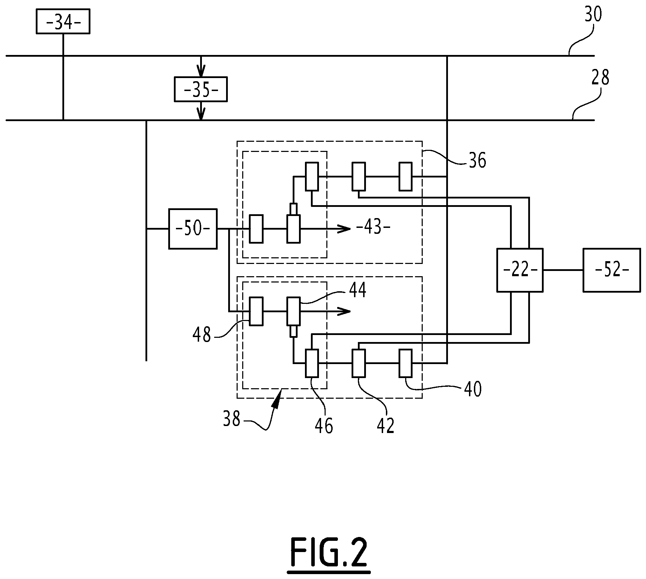

Le système de freinage 24 comprend également un robinet de mécanicien 35 avec lequel le conducteur peut contrôler le niveau de pression en air dans la conduite générale 28 de manière manuelle. Comme illustré sur la figure 2, le robinet de mécanicien 35 autorise l'alimentation en air de la conduite générale de freinage 28 par la conduite principale d'alimentation 30.

Le dispositif de freinage d'urgence 26 comprend au moins un module de freinage d'urgence 36.

Avantageusement, comme illustré sur la figure 2, le dispositif de freinage d'urgence 26 comprend au moins deux modules de freinage d'urgence 36. Les deux modules de freinage d'urgence 36 sont généralement identiques. En particulier, chacun des deux modules de freinage d'urgence 36 comprend l'une ou plusieurs des caractéristiques mentionnées en introduction de la description ou décrites ci-après.

Les deux modules de freinage d'urgence 36 sont avantageusement montés en parallèle et connectés à la conduite générale de freinage 28 et à la conduite principale d'alimentation 30.

Un seul module de freinage d'urgence 36 est nécessaire pour assurer la fonction de freinage d'urgence du dispositif de freinage d'urgence 26.

Une redondance des modules de freinage d'urgence 36 permet de garantir le fonctionnement du dispositif de freinage d'urgence 26, en cas par exemple de défaillance de l'un des modules de freinage d'urgence 36, et d'ainsi augmenter la sécurité.

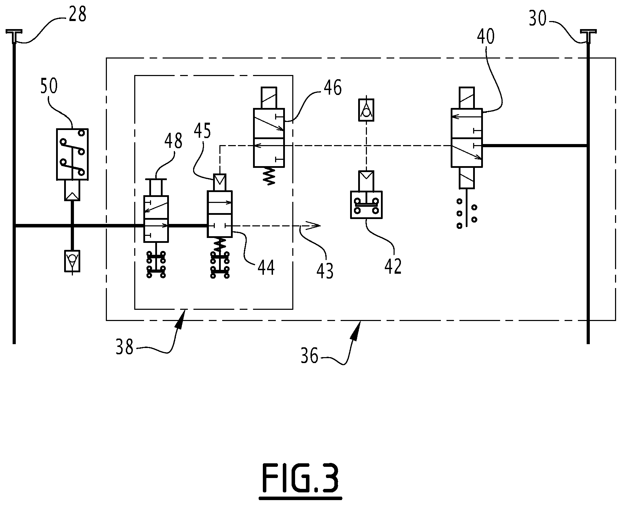

Comme illustré sur les figures 3 à 5, chaque module de freinage d'urgence 36 comprend un groupe de vannes d'urgence 38, une électrovanne 40 et un manostat 42 disposé entre le groupe de vannes d'urgence 38 et l'électrovanne 40.

Le groupe de vannes d'urgence 38 définit une configuration de mise à l'atmosphère de la conduite générale de freinage 28 et une configuration de maintien de la pression dans la conduite générale de freinage 28.

Lorsque le groupe de vannes d'urgence 38 est en configuration de mise à l'atmosphère de la conduite générale de freinage 28, la conduite générale de freinage 28 est connectée à une sortie d'air 43, les semelles de freins passent en position serrée comme décrit ci-dessus et entrainant ainsi un freinage de la locomotive 12.

Lorsque le groupe de vannes d'urgence 38 est en configuration de maintien de la pression dans la conduite générale de freinage 28, la conduite générale de freinage 28 n'est pas connectée à la sortie d'air 43.

Lorsque la locomotive 12 est en mouvement et n'est pas dans une situation de freinage, le groupe de vannes d'urgence 38 est en configuration de maintien de la pression dans la conduite générale de freinage 28.

Lorsque l'interface de sécurité 22 est en configuration activée, c'est-à-dire lorsque la locomotive 12 est en configuration motrice, l'interface de sécurité 22 est apte à envoyer des ordres au groupe de vannes d'urgence 38, et notamment un ordre de freinage d'urgence, par exemple dans le cas d'un obstacle sur la voie.

La réception d'un ordre de freinage d'urgence entraine le passage du groupe de vannes d'urgence 38 en configuration de mise à l'atmosphère de la conduite générale de freinage 28, entrainant ainsi un freinage de la locomotive 12, qui est en configuration motrice, et donc un freinage du véhicule 10.

Le groupe de vannes d'urgence 38 est soit dans un état alimenté pneumatiquement, dans lequel celui-ci est alimenté en air par la conduite principale d'alimentation 30, soit dans un état isolé pneumatiquement, dans lequel celui-ci est isolé de la conduite principale d'alimentation 30.

Comme illustré sur les figures 3 à 5, le groupe de vannes d'urgence 38 comprend une vanne pneumatique 44 et une vanne magnétique 46.

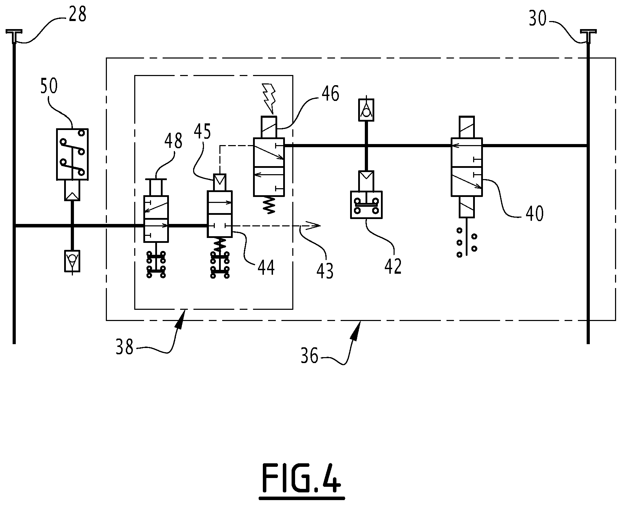

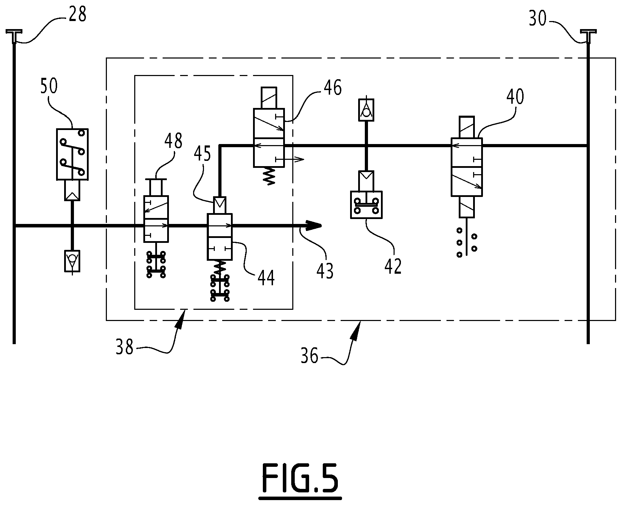

La vanne pneumatique 44 peut passer d'une position de mise à l'atmosphère illustrée sur la figure 5 à une position fermée illustrée sur la figure 4.

En position de mise à l'atmosphère de la vanne pneumatique 44, la conduite générale de freinage 28 est connectée à la sortie d'air 43, autorisant une évacuation de l'air depuis la conduite générale de freinage 28 par la sortie d'air 43.

La vanne pneumatique 44 a une entrée de commande 45. Lorsque l'entrée de commande 45 est mise sous pression, la vanne pneumatique 44 est mise ou bascule en position de mise à l'atmosphère. Lorsque l'entrée de commande 45 n'est pas sous pression, la vanne pneumatique 44 est mise ou bascule en position fermée.

La position de mise à l'atmosphère de la vanne pneumatique 44 définit la configuration de mise à l'atmosphère de la conduite générale de freinage 28 par le groupe de vannes d'urgence 38.

En position fermée de la vanne pneumatique 44, le passage d'air entre la conduite générale de freinage 28 et la sortie d'air 43 est bloqué.

La position fermée de la vanne pneumatique 44 définit la configuration de maintien de la pression dans la conduite générale de freinage 28 par le groupe de vannes d'urgence 38.

La vanne pneumatique 44 est avantageusement une vanne monostable. Autrement dit, la vanne pneumatique 44 comprend une position stable vers laquelle elle revient automatiquement en l'absence de sollicitations extérieurs.

La position stable de la vanne pneumatique 44 est la position fermée. Autrement dit, en l'absence de mise sous pression de l'entrée de commande 45, la vanne pneumatique 44 rebascule automatiquement vers la position fermée.

La vanne magnétique 46 définit une position ouverte et une position fermée.

Lorsque la vanne magnétique 46 est en position fermée comme illustré sur la figure 4, la vanne magnétique 46 bloque le passage d'air de la conduite principale d'alimentation 30 vers l'entrée de commande 45.

Lorsque la vanne magnétique 46 est en position ouverte comme illustré sur la figure 5, la vanne magnétique 46 autorise le passage d'air de la conduite principale d'alimentation 30 vers l'entrée de commande 45.

Lorsque la vanne magnétique 46 est en position fermée ou le groupe de vannes d'urgence 38 est en l'état isolé pneumatiquement, la vanne magnétique 46 ne peut pas mettre sous pression l'entrée de commande 45 de la vanne pneumatique 44.

Lorsque la vanne magnétique 46 est en position ouverte et lorsque le groupe de vannes d'urgence 38 est en l'état alimentée pneumatiquement, la vanne magnétique 46 met sous pression l'entrée de commande 45 de la vanne pneumatique 44.

La vanne magnétique 46 est apte à faire passer la vanne pneumatique 44 d'une position à une autre lorsque le groupe de vannes d'urgence 38 est en l'état alimenté pneumatiquement.

Lorsque le groupe de vannes d'urgence 38 est dans l'état alimenté pneumatiquement, lorsque la vanne magnétique 46 passe de la position fermée à la position ouverte, l'entrée de commande 45 de la vanne pneumatique 44 est mise sous pression par la conduite principale d'alimentation 30 et la vanne pneumatique 44 passe en position de mise à l'atmosphère.

Lorsque la vanne magnétique 46 repasse de la position ouverte à la position fermée, l'entrée de commande 45 de la vanne pneumatique 44 n'est plus mise sous pression, ce qui entraine le passage de la vanne pneumatique 44 en position fermée.

Lorsque le groupe de vannes d'urgence 38 est dans un état isolé pneumatiquement, l'entrée de commande 45 de la vanne pneumatique 44 ne peut pas être mise sous pression par la conduite principale d'alimentation 30. Le passage d'une position à l'autre de la vanne magnétique 46 n'a donc aucune influence sur la position de la vanne pneumatique 44. La vanne pneumatique 44 reste en position fermée. Le groupe de vannes d'urgence 38 reste ainsi en configuration de maintien de la pression dans la conduite générale de freinage 28. Lorsque le groupe de vannes d'urgence 38 est dans un état isolé pneumatiquement, le groupe de vannes d'urgence 38 n'est pas apte à passer en configuration de mise à l'atmosphère.

Ainsi, lorsque le groupe de vannes d'urgence 38 est dans un état isolé pneumatiquement, le module de freinage d'urgence 36 correspondant ne peut pas effectuer de freinage d'urgence.

Le passage de la vanne magnétique 46 d'une position à l'autre est contrôlé par la mise sous tension ou la mise hors tension électrique de ladite vanne magnétique 46.

Lorsque la vanne magnétique 46 est mise sous tension électrique, la vanne magnétique 46 est dans un état alimenté électriquement et la vanne magnétique 46 est maintenue dans la position fermée, comme illustré sur la figure 4.

Lorsque la vanne magnétique 46 est mise hors tension électrique, la vanne magnétique 46 est dans un état non-alimenté électriquement et la vanne magnétique 46 bascule automatiquement dans la position ouverte, comme illustré sur la figure 5.

La vanne magnétique 46 est une vanne monostable dont la position stable est la position ouverte.

Comme illustré sur la figure 2, la vanne magnétique 46 est contrôlée par l'interface de sécurité 22.

Lorsque la locomotive 12 est en configuration motrice, et plus particulièrement que l'interface de sécurité 22 est en configuration activée, l'interface de sécurité 22 est apte à envoyer un ordre de freinage d'urgence à la vanne magnétique 46 en la mettant hors tension électrique de sorte à faire passer cette vanne magnétique 46 en l'état non-alimenté électriquement et donc de basculer la vanne magnétique 46 de la position fermée à la position ouverte.

Lorsque l'interface de sécurité 22 est en configuration activée et le groupe de vannes d'urgence 38 est dans un état alimenté pneumatiquement, l'envoi d'un ordre de freinage d'urgence par l'interface de sécurité 22 entraine ainsi le passage de la vanne magnétique 46 en position ouverte, passant la vanne pneumatique 44 en position de mise à l'atmosphère, ce qui entraine une mise à l'atmosphère de la conduite générale de freinage 28 et donc un freinage de la locomotive 12.

Optionnellement, le groupe de vannes d'urgence 38 comprend également une vanne de sectionnement 48 surveillée par l'interface de sécurité 22.

La vanne de sectionnement 48 est située sur la conduite générale de freinage 28 en amont de la vanne pneumatique 44.

La vanne de sectionnement 48 définit une position fermée, dans laquelle la conduite générale de freinage 28 est isolée de la sortie d'air 43, et une position ouverte, dans laquelle la conduite générale de freinage 28 est connectée à la sortie d'air 43 lorsque la vanne pneumatique 44 est en position de mise à l'atmosphère.

Lorsque la vanne de sectionnement 48 est en position fermée, la vanne de sectionnement 48 bloque le passage d'air de la conduite générale de freinage 28 à la vanne pneumatique 44 et donc à la sortie d'air 43. Le passage de la vanne pneumatique 44 en position de mise à l'atmosphère n'entraine pas la mise à l'atmosphère de la conduite générale de freinage 28.

Lorsque la vanne de sectionnement 48 est en position ouverte, la vanne de sectionnement 48 autorise le passage d'air de la conduite générale de freinage 28 à la vanne pneumatique 44, et à la sortie d'air 43 lorsque la vanne pneumatique 44 en position de mise à l'atmosphère.

Lorsque l'interface de sécurité 22 ne détecte aucune défaillance du groupe de vannes d'urgence 38, la vanne de sectionnement 48 est en position ouverte. La mise à l'atmosphère de la conduite générale de freinage 28 est donc possible lorsque la vanne pneumatique 44 passe en position de mise à l'atmosphère. L'interface de sécurité 22 est apte à faire passer la vanne de sectionnement 48 en position fermée, en cas de défaillance, par exemple dans le cas où la vanne magnétique 46 est passée par erreur dans un état non-alimenté électriquement et donc en position ouverte entrainant une mise à l'atmosphère non voulue de la conduite générale de freinage 28.

La vanne de sectionnement 48 a ainsi pour effet de permettre un isolement du groupe de vannes d'urgence 38 en cas de défaillance d'une des vannes 44, 46 et d'empêcher une mise à l'atmosphère non voulue de la conduite générale de freinage 28.

L'électrovanne 40 est située sur la conduite principale d'alimentation 30 en amont du groupe de vannes d'urgence 38.

L'électrovanne 40 définit une position ouverte et une position fermée.

Lorsque l'électrovanne 40 est en position ouverte, comme illustré sur les figures 4 et 5, le groupe de vannes d'urgence 38 est alimenté pneumatiquement par la conduite principale d'alimentation 30. Le groupe de vannes d'urgence 38 est alors en un état alimenté pneumatiquement.

Lorsque l'électrovanne 40 est en position fermée, comme illustré sur la figure 3, le groupe de vannes d'urgence 38 est isolée de la conduite principale d'alimentation 30. Le groupe de vannes d'urgence 38 est alors en un état isolé pneumatiquement.

Lorsque la locomotive 12 est configuration de remorquage, et plus particulièrement l'interface de sécurité 22 est en configuration désactivée, l'électrovanne 40 est en position fermée. Le groupe de vannes d'urgence 38 est alors en un état isolé pneumatiquement et ne peut donc pas passer en une configuration de mise à l'atmosphère de la conduite générale de freinage 28. La fonction de freinage d'urgence du module de freinage d'urgence 36 est ainsi désactivée, ce qui permet de déplacer ladite locomotive 12 qui est en configuration de remorquage.

Lorsque la locomotive 12 est en configuration motrice, et plus particulièrement que l'interface de sécurité 22 est en configuration activée, l'électrovanne 40 est en position ouverte. Le groupe de vannes d'urgence 38 est alors en un état alimenté pneumatiquement.

L'électrovanne 40 est avantageusement une électrovanne bistable.

Avantageusement, lors du passage de la locomotive 12 d'une configuration motrice vers une configuration de remorquage, un signal est envoyé à l'électrovanne 40 afin de la passer d'une position à l'autre.

Pour des raisons de maintenance, il est également possible de passer l'électrovanne 40 d'une position à l'autre manuellement.

Le manostat 42 est situé sur la conduite principale d'alimentation 30 entre l'électrovanne 40 et le groupe de vannes d'urgence 38.

Le manostat 42 est un dispositif de détection de seuil de pression du module de freinage d'urgence 36.

Le manostat 42 détecte le seuil de pression dans la conduite principale d'alimentation 30. Une telle détection permet de diagnostiquer l'état alimenté ou isolé pneumatiquement du groupe de vannes d'urgence 38.

Le manostat 42 est apte à communiquer l'état alimenté ou isolé pneumatiquement du groupe de vannes d'urgence 38 à l'interface de sécurité 22 en configuration activée.

Lorsque l'interface de sécurité 22 est en configuration activée, ledit manostat 42 permet de s'assurer que le groupe de vannes d'urgence 38 est bien en un état alimenté pneumatiquement, et donc que le module de freinage d'urgence 36 est apte à réaliser un ordre de freinage d'urgence.

Or, lorsque le groupe de vannes d'urgence 38 est dans un état isolé pneumatiquement, lorsque l'interface de sécurité 22 est en configuration activée, cela signifie que l'électrovanne 40 a été passé manuellement en position fermée ou qu'il y a une défaillance d'alimentation du groupe de vannes d'urgence 38, ce qui pourrait présenter un risque de sécurité.

En effet, lorsque le groupe de vannes d'urgence 38 est en un état isolé pneumatiquement, le groupe de vannes d'urgence 38 ne peut pas passer en une configuration de mise à l'atmosphère de la conduite générale de freinage 28. Le module de freinage d'urgence 36 n'est pas apte à assurer le freinage de la locomotive 12, ce qui pose un problème de sécurité lorsque la locomotive 12 est en configuration motrice.

Pour des raisons de sécurité, l'interface de sécurité 22 en configuration activée est ainsi apte à communiquer un ordre de freinage d'urgence à le groupe de vannes d'urgence 38 uniquement lorsque le manostat 42 associé à le groupe de vannes d'urgence 38 communique un état alimenté pneumatiquement dudit groupe de vannes d'urgence 38.

Le manostat 42 est avantageusement un appareil d'indication active apte à transmettre un signal d'information à l'interface de sécurité 22 dès que le manostat 42 détecte une variation de la pression dans la conduite principale d'alimentation 30.

Le manostat 42 communique un signal d'information à l'interface de sécurité 22 dès que la pression dans la conduite principale d'alimentation 30 devient par exemple inférieure à 2 bar.

En variante, le manostat 42 communique l'état du groupe de vannes d'urgence 38 à l'interface de sécurité 22 à une fréquence constante paramétrable.

Optionnellement, le dispositif de freinage d'urgence 26 comprend, en outre, au moins un manostat de régulation 50 disposé sur la conduite générale de freinage 28 en amont du ou des groupes de vannes d'urgence 38.

Ledit manostat 50 détecte la pression dans la conduite générale de freinage 28 et permet de s'assurer que la pression est maintenue dans la conduite générale de freinage 28 lorsque le groupe de vannes d'urgence 38 est en configuration de maintien, et dans le cas échéant que la pression a bien diminué lorsque le groupe de vannes d'urgence 38 est en configuration de mise à l'atmosphère.

Lorsque l'interface de sécurité 22 est en configuration activée, ledit manostat de régulation 50 communique toute modification de pression à l'interface de sécurité 22 qui diagnostique le fonctionnement du ou des modules d'urgence 36.

Comme illustré sur la figure 2, le manostat de régulation 50 est par exemple disposé en amont des modules de freinage d'urgence 36 et est commun aux deux modules.

Avantageusement, la locomotive 12 comprend également un système d'alarme 52 définissant une configuration d'alarme et une configuration éteinte.

En configuration d'alarme, le système d'alarme 52 envoie un signal d'alarme au conducteur de la locomotive 12, par exemple un signal sonore et/ou lumineux propre à informer le conducteur d'une défaillance et/ou d'un problème de sécurité.

Le système d'alarme 52 est contrôlé par l'interface de sécurité 22 en configuration activée, et plus particulièrement lorsque la locomotive 12 est en configuration motrice.

Lorsque l'interface de sécurité 22 est en configuration désactivée, et plus particulièrement lorsque la locomotive 12 est en configuration de remorquage, le système d'alarme 52 reste toujours en configuration éteinte.

Lorsque l'interface de sécurité 22 est en configuration activée et qu'un manostat 42 communique un état isolé pneumatiquement du groupe de vannes d'urgence 38 associé, le système d'alarme 52 passe en configuration d'alarme.

Le conducteur est ainsi informé qu'au moins l'un des modules de freinage d'urgence 36 n'est pas apte à effectuer un freinage d'urgence, ce qui pose un problème de sécurité lorsque la locomotive 12 est en configuration motrice.

Dans le cas où deux modules de freinage d'urgence 36 sont installés dans le dispositif de freinage d'urgence 26, lorsque l'un des manostats 42 communique un état isolé pneumatiquement et l'autre des manostats 42 communique un état alimenté pneumatiquement, l'interface de sécurité 22 passe le système d'alarme 52 en configuration d'alarme et envoie également un ordre de freinage d'urgence à le groupe de vannes d'urgence 38 étant en état alimenté pneumatiquement.

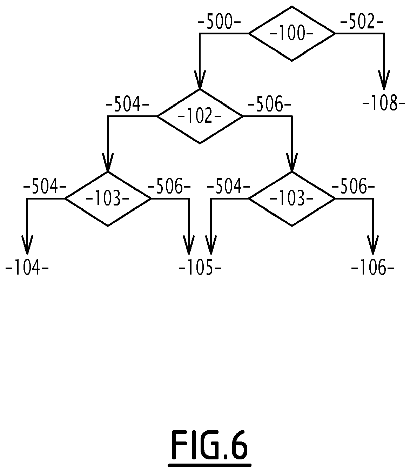

La figure 6 illustre le procédé de décision de l'interface de sécurité 22, notamment concernant le système d'alarme 52.

L'étape 100 représente le questionnement sur la configuration de l'interface de sécurité 22.

Lorsque l'interface de sécurité 22 est en configuration activée 500, comme illustré aux étapes 102 et 103, l'état du groupe de vannes d'urgence 38 des deux modules de freinage d'urgence 36 est tout d'abord diagnostiqué.

Lorsque les deux groupes de vannes d'urgence 38 sont en un état alimenté pneumatiquement 504, le système d'alarme 52 reste en configuration éteinte, correspondant à l'étape 104.

Lorsque l'un des groupes de vannes d'urgence 38 est dans un état isolé pneumatiquement 506 et l'autre est dans un état alimenté pneumatiquement 504, le système d'alarme 52 passe en configuration d'alarme et l'interface de sécurité 22 envoie un ordre de freinage d'urgence au module de freinage d'urgence 36 dont le groupe de vannes d'urgence 38 est en état alimenté pneumatiquement, correspondant à l'étape 105.

Lorsque les deux groupes de vannes d'urgence 38 sont en un état isolé pneumatiquement 506, le système d'alarme 52 passe en configuration d'alarme, correspondant à l'étape 106.

Lorsque l'interface de sécurité 22 est en configuration désactivée 502, le système d'alarme 52 reste en configuration éteinte, correspondant à l'étape 108.

Le fonctionnement du dispositif de freinage d'urgence 26 d'une telle locomotive ferroviaire 12 va maintenant être décrit.

En référence à la figure 3, le fonctionnement du dispositif de freinage d'urgence 26 lorsque la locomotive ferroviaire 12 est en configuration de remorquage va tout d'abord être décrit.

La locomotive 12 étant remorquée, la source d'alimentation électrique 27 est en état hors tension électrique.

L'interface de sécurité 22 est en configuration désactivée et envoie un signal à l'électrovanne 40 de chaque module de freinage d'urgence 36.

Dans chacun de module de freinage d'urgence 36, l'électrovanne 40 passe ainsi en position fermée.

Le groupe de vannes d'urgence 38 de chaque module de freinage d'urgence 36 est donc en état isolé pneumatiquement, et n'est donc pas alimenté en air par la conduite principale d'alimentation 30.

Dans chacun de module de freinage d'urgence 36, la vanne magnétique 46 n'est pas alimentée par la conduite principale d'alimentation 30. La vanne pneumatique 44 reste ainsi en position fermée.

Dans chacun de module de freinage d'urgence 36, le groupe de vannes d'urgence 38 reste en configuration de maintien, et ne peut pas être passé en configuration de mise à l'atmosphère de la conduite générale de freinage 28.

Chaque module de freinage d'urgence 36 est ainsi désactivé.

La fonction de freinage d'urgence du dispositif de freinage d'urgence 26 est ainsi inhibée.

La locomotive 12 en configuration de remorquage peut ainsi être déplacée, et plus particulièrement être remorquée par une autre locomotive 12.

En référence aux figures 4 et 5, le fonctionnement du dispositif de freinage d'urgence 26 lorsque la locomotive ferroviaire 12 est en configuration motrice va être décrit par la suite.

La locomotive 12 étant motrice, la source d'alimentation électrique 27 est en état sous tension électrique.

L'interface de sécurité 22 est en alors configuration activée et envoie un signal à l'électrovanne 40 de chaque module de freinage d'urgence 36.

Dans chacun de module de freinage d'urgence 36, l'électrovanne 40 passe alors en position ouverte.

Le groupe de vannes d'urgence 38 est alimenté par la conduite principale d'alimentation 30.

Comme illustré sur la figure 4 en fonctionnement normal de la locomotive, c'est-à-dire sans ordre de freinage d'urgence, la vanne magnétique 46 est alimentée électriquement par l'intermédiaire de l'interface de sécurité 22 et est donc en état alimenté électriquement.

La vanne magnétique 46 est ainsi maintenue en position fermée.

L'entrée de commande 45 de la vanne pneumatique 44 n'est pas mise sous pression.

La vanne pneumatique 44 reste ainsi en position fermée.

Le groupe de vannes d'urgence 38 est ainsi en configuration de maintien. Il n'y pas de freinage.

Le manostat 42 communique à l'interface de sécurité 22 sur l'état du groupe de vannes d'urgence 38 des deux modules de freinage d'urgence 36.

Lorsque les deux groupes de vannes d'urgence 38 sont en un état alimenté pneumatiquement 504, le système d'alarme 52 reste en configuration éteinte.

Lorsque l'un des groupes de vannes d'urgence 38 est dans un état isolé pneumatiquement 506 et l'autre est dans un état alimenté pneumatiquement 504, le système d'alarme 52 passe en configuration d'alarme et l'interface de sécurité 22 envoie un ordre de freinage d'urgence au module de freinage d'urgence 36 dont le groupe de vannes d'urgence 38 est l'état alimenté pneumatiquement.

Lorsque les deux groupes de vannes d'urgence 38 sont en un état isolé pneumatiquement 506, le système d'alarme 52 passe en configuration d'alarme.

En référence à la figure 5, un ordre de freinage d'urgence est envoyé par l'interface de sécurité 22 à un des modules de freinage d'urgence 36, qui est en un état alimenté pneumatiquement.

Plus particulièrement, un ordre de freinage d'urgence est envoyé à la vanne magnétique 46 du groupe de vannes d'urgence 38 dudit module de freinage d'urgence 36 mettant la vanne magnétique 46 hors tension. La vanne magnétique 46 est en l'état non-alimenté électriquement et bascule en position ouverte, autorisant le passage d'air de la conduite principale d'alimentation 30 vers l'entrée de commande 45.

L'entrée de commande 45, est mise sous pression et la vanne pneumatique 44 passe en position de mise à l'atmosphère.

Le groupe de vannes d'urgence 38 est ainsi en configuration de mise à l'atmosphère de la conduite générale de freinage 28, reliant ainsi la conduite générale de freinage 28 à la sortie d'air 43.

La locomotive 12 est ainsi freinée.

Une telle locomotive ferroviaire 12 comprend un dispositif de freinage d'urgence 26 qui est facile à désactiver sans action manuelle, notamment lorsque la locomotive 12 doit être remorquée.

En effet, un tel dispositif de freinage d'urgence 26 est automatiquement désactivé lorsque l'interface de sécurité 22 passe en configuration désactivée, par exemple lorsque la locomotive 12 est mis en configuration de remorquage en passant la source électrique d'alimentation 27 hors tension.

De plus, la présence du manostat 42 permet de vérifier le bon fonctionnement du dispositif de freinage d'urgence afin de s'assurer qu'un freinage d'urgence puisse être effectué, lorsque l'interface de sécurité 22 est en configuration activée et qu'elle en envoie l'ordre. Toutes défaillances du dispositif sont communiquées au conducteur par un système d'alarme 52.

Une telle locomotive ferroviaire 12 a donc un fonctionnement simplifié et respecte les exigences de sécurité en termes de freinage d'urgence.

## Revendications

1. Locomotive ferroviaire comprenant :
- une interface de sécurité (22) ayant une configuration activée et une configuration désactivée,
- un système de freinage (24) comprenant une conduite générale de freinage (28) et une conduite principale d'alimentation (30), le système de freinage (24) étant apte à ralentir, de préférence immobiliser, la locomotive ferroviaire (12), et
- un dispositif de freinage d'urgence (26) comprenant au moins un module de freinage d'urgence (36), le module de freinage d'urgence comprenant :
- un groupe de vannes d'urgence (38),
- une électrovanne (40) définissant une position ouverte, dans laquelle le groupe de vannes d'urgence (38) est alimenté pneumatiquement par la conduite principale d'alimentation (30), et une position fermée, dans laquelle le groupe de vannes d'urgence (38) est isolé de la conduite principale d'alimentation (30);
lorsque l'interface de sécurité (22) est en configuration activée et l'électrovanne (40) est en position ouverte, le groupe de vannes d'urgence (38) étant alors en un état alimenté pneumatiquement par la conduite principale d'alimentation (30),
lorsque l'interface de sécurité (22) est en configuration désactivée ou l'électrovanne (40) est en position fermée, le groupe de vannes d'urgence (38) étant alors en un état isolé pneumatiquement de la conduite principale d'alimentation (30),
**caractérisée en ce que** le module de freinage d'urgence (36) comprend en outre un manostat (42) disposé entre l'électrovanne (40) et le groupe de vannes d'urgence (38), le manostat (42) étant apte à communiquer l'état alimenté ou isolé pneumatiquement du groupe de vannes d'urgence (38) à l'interface de sécurité (22) au moins en configuration activée.

2. Locomotive ferroviaire selon la revendication 1, dans laquelle le groupe de vannes d'urgence (38) définit une configuration de mise à l'atmosphère de la conduite générale de freinage (28) et une configuration de maintien de la pression dans la conduite générale de freinage (28),
l'interface de sécurité (22) étant apte à envoyer un ordre de freinage d'urgence au groupe de vannes d'urgence (38), la réception d'un ordre de freinage d'urgence par le groupe de vannes d'urgence (38) passant le groupe de vannes d'urgence (38) en configuration de mise à l'atmosphère de la conduite générale de freinage.

3. Locomotive ferroviaire selon la revendication 2, dans laquelle l'interface de sécurité (22) est apte à envoyer un ordre de freinage d'urgence au groupe de vannes d'urgence (38) uniquement lorsque le manostat (42) associé au groupe de vannes d'urgence (38) communique un état alimenté pneumatiquement du groupe de vannes d'urgence (38).

4. Locomotive ferroviaire selon l'une quelconque des revendications 1 à 3 comprenant un système d'alarme (52) ayant une configuration d'alarme et une configuration éteinte, le système d'alarme (52) étant apte à passer en configuration d'alarme lorsque l'interface de sécurité (22) est en configuration activée et le manostat (42) communique à l'interface de sécurité (22) un état isolé pneumatiquement du groupe de vannes d'urgence (38).

5. Locomotive ferroviaire selon l'une quelconque des revendications 1 à 4, dans laquelle le groupe de vannes d'urgence (38) comprend une vanne magnétique (46) et une vanne pneumatique (44) définissant une position de mise à l'atmosphère dans laquelle la conduite générale de freinage (28) est connectée à une sortie d'air (43) et une position fermée dans laquelle la conduite générale de freinage (28) est isolée de la sortie d'air (43), la vanne magnétique (46) étant apte à faire passer la vanne pneumatique (44) de la position de mise à l'atmosphère à la position fermée, et respectivement de la position fermée à la position de mise à l'atmosphère lorsque le groupe de vannes d'urgence (38) est dans un état alimenté pneumatiquement.

6. Locomotive ferroviaire selon la revendication 5, dans laquelle le groupe de vannes d'urgence (38) comprend, en outre, une vanne de sectionnement (48) surveillée par l'interface de sécurité (22) et ayant une position fermée, dans laquelle la conduite générale de freinage (28) est isolée de la sortie d'air (43), et une position ouverte, dans laquelle la conduite générale de freinage (28) est connectée à la sortie d'air (43) lorsque la vanne pneumatique (44) est en position de mise à l'atmosphère.

7. Locomotive ferroviaire selon l'une quelconque des revendications 1 à 6, dans laquelle le dispositif de freinage d'urgence (26) comprend un manostat de régulation (50) disposé sur la conduite générale de freinage (28) en amont du ou des groupes de vannes d'urgence (38).

8. Locomotive ferroviaire selon l'une quelconque des revendications 1 à 7 comprenant une source d'alimentation électrique (27) ayant un état sous tension électrique et un état hors tension électrique, lorsque la source d'alimentation électrique (27) est en l'état sous tension électrique, l'interface de sécurité (22) étant en configuration activée, et lorsque la source d'alimentation électrique (27) est en état hors tension électrique, l'interface de sécurité (22) étant en configuration désactivée.

9. Locomotive ferroviaire selon l'une quelconque des revendications 1 à 8 comprenant au moins deux modules de freinage d'urgence (36).

10. Véhicule ferroviaire comprenant une première locomotive (12a) et une deuxième locomotive (12b), la première et la deuxième locomotives (12) étant des locomotives selon l'une quelconque des revendications 1 à 9, la première locomotive (12a) remorquant la deuxième locomotive (12b), l'interface de sécurité (22) de la première locomotive (12a) étant en configuration activée, l'interface de sécurité (22) de la deuxième locomotive (12b) étant en configuration désactivée.

## Patentansprüche

1. Eisenbahnlokomotive, umfassend:
- eine Sicherheitsschnittstelle (22) mit einer aktivierten und einer deaktivierten Konfiguration,
- ein Bremssystem (24), das eine allgemeine Bremsleitung (28) und eine Hauptversorgungsleitung (30) umfasst, wobei das Bremssystem (24) imstande ist, die Eisenbahnlokomotive (12) zu verlangsamen, vorzugsweise zum Stehen zu bringen, und
- eine Notbremsvorrichtung (26), die mindestens ein Notbremsmodul (36) umfasst, wobei das Notbremsmodul umfasst:
- eine Gruppe von Notventilen (38),
- ein Magnetventil (40), das eine geöffnete Position definiert, in der die Notventilgruppe (38) von der Hauptversorgungsleitung (30) pneumatisch versorgt wird, und eine geschlossene Position, in der die Notventilgruppe (38) von der Hauptversorgungsleitung (30) isoliert ist;
so dass, wenn die Sicherheitsschnittstelle (22) in der aktivierten Konfiguration ist und das Magnetventil (40) in geöffneter Position ist, die Notventilgruppe (38) in einem von der Hauptversorgungsleitung (30) pneumatisch versorgten Zustand ist,
so dass, wenn die Sicherheitsschnittstelle (22) in der deaktivierten Konfiguration ist und das Magnetventil (40) in geschlossener Position ist, die Notventilgruppe (38) in einem von der Hauptversorgungsleitung (30) pneumatisch isolierten Zustand ist,
**dadurch gekennzeichnet, dass** das Notbremsmodul (36) ferner einen Druckwächter (42) umfasst, der zwischen dem Magnetventil (40) und der Notventilgruppe (38) angeordnet ist, wobei der Druckwächter (42) imstande ist, den pneumatisch versorgten oder isolierten Zustand der Notventilgruppe (38) der Sicherheitsschnittstelle (22) zumindest in aktivierter Konfiguration zu übermitteln.

2. Eisenbahnlokomotive nach Anspruch 1, wobei die Notventilgruppe (38) eine Konfiguration zum Entlüften der allgemeinen Bremsleitung (28) und eine Konfiguration zum Aufrechterhalten des Drucks in der allgemeinen Bremsleitung (28) definiert,
wobei die Sicherheitsschnittstelle (22) imstande ist, einen Notbremsbefehl an die Notventilgruppe (38) zu senden, wobei der Empfang eines Notbremsbefehls durch die Notventilgruppe (38) die Notventilgruppe (38) in die Konfiguration zum Entlüften der allgemeinen Bremsleitung überführt.

3. Eisenbahnlokomotive nach Anspruch 2, wobei die Sicherheitsschnittstelle (22) imstande ist, einen Notbremsbefehl an die Notventilgruppe (38) nur dann zu senden, wenn der der Notventilgruppe (38) zugeordnete Druckwächter (42) einen pneumatisch versorgten Zustand der Notventilgruppe (38) übermittelt.

4. Eisenbahnlokomotive nach einem der Ansprüche 1 bis 3, umfassend ein Alarmsystem (52) mit einer Alarmkonfiguration und einer ausgeschalteten Konfiguration, wobei das Alarmsystem (52) imstande ist, in die Alarmkonfiguration zu wechseln, wenn die Sicherheitsschnittstelle (22) in der aktivierten Konfiguration ist und der Druckwächter (42) der Sicherheitsschnittstelle (22) einen pneumatisch isolierten Zustand der Notventilgruppe (38) übermittelt.

5. Eisenbahnlokomotive nach einem der Ansprüche 1 bis 4, wobei die Notventilgruppe (38) ein Magnetventil (46) und ein Pneumatikventil (44) umfasst, die eine Entlüftungsposition definiert, in der die allgemeine Bremsleitung (28) mit einem Luftauslass (43) verbunden ist, und eine geschlossene Position, in der die allgemeine Bremsleitung (28) vom Luftauslass (43) isoliert ist, wobei das Magnetventil (46) imstande ist, das Pneumatikventil (44) aus der Entlüftungsposition in die geschlossene Position und bzw. aus der geschlossenen Position in die Entlüftungsposition zu überführen, wenn die Notventilgruppe (38) in einem pneumatisch versorgten Zustand ist.

6. Eisenbahnlokomotive nach Anspruch 5, wobei die Notventilgruppe (38) ferner ein Trennventil (48) umfasst, das von der Sicherheitsschnittstelle (22) überwacht wird und eine geschlossene Position hat, in der die allgemeine Bremsleitung (28) vom Luftauslass (43) isoliert ist, und eine geöffnete Position, in der die allgemeine Bremsleitung (28) mit dem Luftauslass (43) verbunden ist, wenn das Pneumatikventil (44) in der Entlüftungsposition ist.

7. Eisenbahnlokomotive nach einem der Ansprüche 1 bis 6, wobei die Notbremsvorrichtung (26) einen Regelungs-Druckwächter (50) umfasst, der auf der allgemeinen Bremsleitung (28) stromaufwärts von der oder den Notventilgruppen (38) angeordnet ist.

8. Eisenbahnlokomotive nach einem der Ansprüche 1 bis 7, umfassend eine Stromversorgungsquelle (27), die einen elektrisch eingeschalteten Zustand und einem elektrisch ausgeschalteten Zustand hat, wobei, wenn die Stromversorgungsquelle (27) im elektrisch eingeschalteten Zustand ist, die Sicherheitsschnittstelle (22) in aktivierter Konfiguration ist, und wenn die elektrische Stromversorgungsquelle (27) im elektrisch ausgeschalteten Zustand ist, die Sicherheitsschnittstelle (22) in deaktivierter Konfiguration ist.

9. Eisenbahnlokomotive nach einem der Ansprüche 1 bis 8, umfassend mindestens zwei Notbremsmodule (36).

10. Schienenfahrzeug, umfassend eine erste Lokomotive (12a) und eine zweite Lokomotive (12b), wobei die erste und die zweite Lokomotive (12) Lokomotiven nach einem der Ansprüche 1 bis 9 sind, wobei die erste Lokomotive (12a) die zweite Lokomotive (12b) zieht, wobei die Sicherheitsschnittstelle (22) der ersten Lokomotive (12a) in aktivierter Konfiguration ist, wobei die Sicherheitsschnittstelle (22) der zweiten Lokomotive (12b) in deaktivierter Konfiguration ist.

## Claims

1. Railway locomotive including:
- a safety interface (22) with an enabled and a disabled configuration,
- a braking system (24) comprising a general braking pipe (28) and a main supply pipe (30), the braking system (24) being capable of slowing down, preferably immobilising, the railway locomotive (12), and
- an emergency braking device (26) comprising at least one emergency braking module (36), the emergency braking module comprising:
- a group of emergency valves (38),
- a solenoid valve (40) defining an open position, in which the emergency valve group (38) is pneumatically supplied by the main supply line (30), and a closed position, in which the emergency valve group (38) is isolated from the main supply line (30);
when the safety interface (22) is in the activated configuration and the solenoid valve (40) is in the open position, the emergency valve group (38) is in a state in which it is supplied pneumatically from the main supply line (30),
when the safety interface (22) is in the deactivated configuration or the solenoid valve (40) is in the closed position, the emergency valve group (38) being in a state of pneumatic isolation from the main supply line (30),
**characterised in that** the emergency braking module (36) further comprises a pressure switch (42) disposed between the solenoid valve (40) and the emergency valve assembly (38), the pressure switch (42) being capable of communicating the energised or pneumatically isolated state of the emergency valve assembly (38) to the safety interface (22) at least in the activated configuration.

2. A railway locomotive according to claim 1, in which the emergency valve group (38) defines a configuration for venting the brake pipe (28) and a configuration for maintaining the pressure in the brake pipe (28),
the safety interface (22) being able to send an emergency braking command to the emergency valve group (38), the reception of an emergency braking command by the emergency valve group (38) passing the emergency valve group (38) into the braking brake pipe venting configuration.

3. A railway locomotive according to claim 2, wherein the safety interface (22) is adapted to send an emergency braking command to the emergency valve group (38) only when the pressure switch (42) associated with the emergency valve group (38) communicates a pneumatically powered state of the emergency valve group (38).

4. A railway locomotive according to any one of claims 1 to 3 comprising an alarm system (52) having an alarm configuration and an off configuration, the alarm system (52) being adapted to switch to the alarm configuration when the safety interface (22) is in the activated configuration and the pressure switch (42) communicates a pneumatically isolated state from the emergency valve group (38) to the safety interface (22).

5. A railway locomotive according to any one of claims 1 to 4, wherein the emergency valve assembly (38) comprises a solenoid valve (46) and a pneumatic valve (44) defining a venting position in which the brake pipe (28) is connected to an air outlet (43) and a closed position in which the brake pipe (28) is isolated from the air outlet (43), the solenoid valve (46) being adapted to move the pneumatic valve (44) from the vented position to the closed position, and respectively from the closed position to the vented position when the emergency valve assembly (38) is in a pneumatically powered condition.

6. A railway locomotive according to claim 5, wherein the emergency valve group (38) further comprises a block valve (48) monitored by the safety interface (22) and having a closed position, in which the brake pipe (28) is isolated from the air outlet (43), and an open position, in which the brake pipe (28) is connected to the air outlet (43) when the pneumatic valve (44) is in the venting position.

7. A railway locomotive according to any one of claims 1 to 6, in which the emergency braking device (26) comprises a regulating pressure switch (50) arranged on the general braking pipe (28) upstream of the emergency valve group or groups (38).

8. A railway locomotive according to any one of claims 1 to 7 comprising a power source (27) having an energised state and a de-energised state, when the power source (27) is in the energised state, the safety interface (22) being in an activated configuration, and when the power source (27) is in the de-energised state, the safety interface (22) being in a de-activated configuration.

9. A railway locomotive according to any one of claims 1 to 8 comprising at least two emergency braking modules (36).

10. A railway vehicle comprising a first locomotive (12a) and a second locomotive (12b), the first and second locomotives (12) being locomotives according to any one of claims 1 to 9, the first locomotive (12a) towing the second locomotive (12b), the safety interface (22) of the first locomotive (12a) being in an activated configuration, the safety interface (22) of the second locomotive (12b) being in a deactivated configuration.
